# EUROPÄISCHE PATENTSCHRIFT

(11) **EP 0 886 602 B1**
(45) Veröffentlichungstag und Bekanntmachung des Hinweises auf die Patenterteilung: **12.01.2000**
(21) Anmeldenummer: 97916335.9
(22) Anmeldetag: 07.03.1997
(51) Int. Cl.: B65B 35/24, B65B 35/18, B65G 47/64

(54) **VORRICHTUNG ZUM EINBRINGEN VON GEGENSTÄNDEN, INSBESONDERE VON GEFÜLLTEN FLACHBEUTELN IN KARTONS**
DEVICE FOR INTRODUCING ITEMS, IN PARTICULAR FILLED FLAT BAGS, INTO CARTONS
DISPOSITIF POUR L'INTRODUCTION D'OBJETS, EN PARTICULIER DE SACHETS PLATS REMPLIS, DANS DES CARTONS

(30) Priorität: 14.03.1996 DE 19609976; 14.03.1996 DE 19609974
(43) Veröffentlichungstag der Anmeldung: 30.12.1998
(73) Patentinhaber: ROBERT BOSCH GMBH, 70442 Stuttgart (DE)
(72) Erfinder: VISSERS, Eugene, NL-5591 EG Heeze (NL); MOONEN, Jan, NL-6039 AB Stramproy (NL); MUEHLBERG, Mike, NL-6006 MR Weert (NL); KORTEN, Bert, NL-6005 NA Weert (NL)
(86) Internationale Anmeldenummer: DE9700446
(87) Internationale Veröffentlichungsnummer: WO9733795

(56) Entgegenhaltungen:
- EP-A- 0 059 984
- EP-A- 0 666 230
- BE-A- 678 711
- US-A- 4 800 703

## Beschreibung

Die Erfindung geht aus von einer Vorrichtung zum Einbringen von Gegenständen, insbesondere von gefüllten Flachbeuteln in Kartons nach dem Oberbegriff des Anspruchs 1, wie sie beispielsweise aus der FR 1 537 812 bekannt geworden ist. Bei der bekannten Vorrichtung gelangen die Flachbeutel von einer vertikal angeordneten Ausschleußeinrichtung auf ein horizontal verschiebbares, auf- und abbewegliches Förderblech, das die Flachbeutel unterhalb eines Saugkopfes positioniert. Nach dem Aufnehmen der Flachbeutel von dem Förderblech mittels des Saugkopfes wird das Förderblech zurückgezogen, so daß der Saugkopf die Flachbeutel in einen von mehreren unterhalb des Saugkopfes auf einem Förderband angeordneten Kartons ablegen kann. Um mittels der bekannten Vorrichtung einen Flachbeutel in einen bestimmten Karton abzulegen ist es erforderlich, den entsprechenden Karton durch Verstellen des Förderbandes unterhalb des Saugkopfes zu verfahren. Dadurch ist bei mehreren auf dem Förderband befindlichen Kartons ein aufwendig ausgebildetes Förderband erforderlich. Weiterhin kann während des Verstellens des Förderbandes in der Regel gleichzeitig kein anderer Flachbeutel in einen Karton abgelegt werden. Aufgabe der Erfindung ist es, eine Vorrichtung zum Einbringen von Gegenständen, insbesondere von gefüllten Flachbeuteln in Kartons, derart weiterzubilden, daß diese die aus dem Stand der Technik bekannten Nachteile bezüglich Flexibilität und Leistungsfähigkeit bei komplexen Anwendungsfällen verhindert, und gleichzeitig einen kompakten Aufbau ermöglicht. Diese Aufgabe wird durch die kennzeichnenden Merkmale des Anspruchs 1 gelöst. Weitere Vorteile und vorteilhafte Weiterbildungen der erfindungsgemäßen Vorrichtung zum Einbringen von Gegenständen, insbesondere von gefüllten Flachbeuteln in Kartons, ergeben sich aus den Unteransprüchen und der Beschreibung.

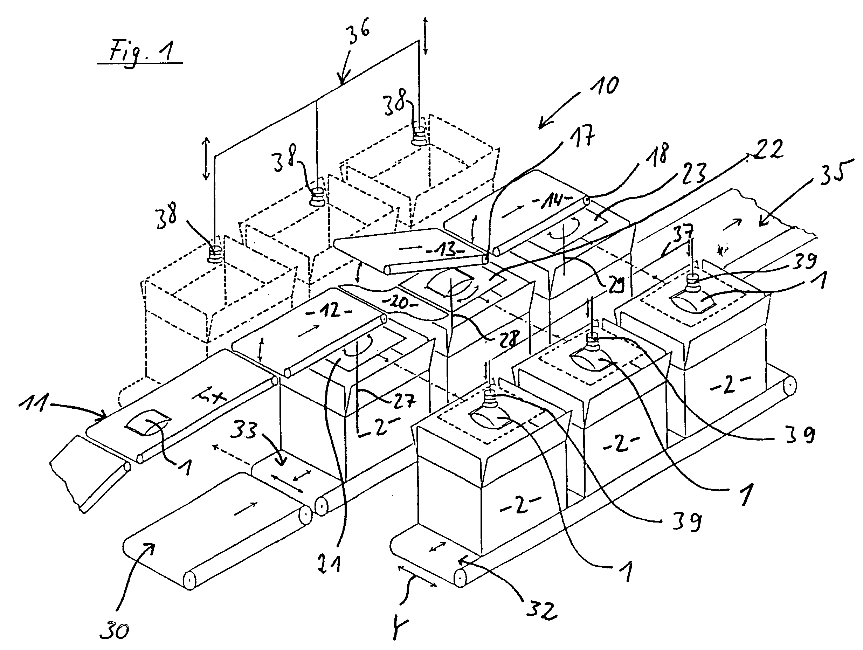

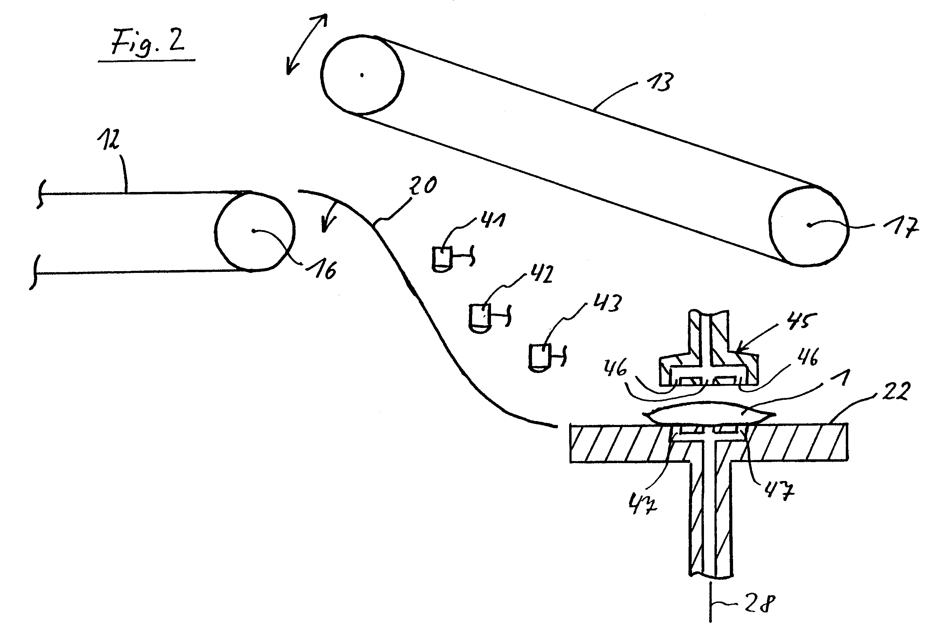

Ein Ausführungsbeispiel der Erfindung ist in der Zeichnung dargestellt und wird in der nachfolgenden Beschreibung näher erläutert. Figur 1 zeigt eine Vorrichtung zum Einbringen von Gegenständen, insbesondere von gefüllten Flachbeuteln in Kartons, in einer vereinfachten perspektivischen Darstellung, und Figur 2 einen Teil der Vorrichtung nach Figur 1 in einem vereinfachten Längsschnitt.

Die Vorrichtung 10 zum Einbringen von Gegenständen, insbesondere von gefüllten Flachbeuteln 1 in Kartons 2, hat eine als Bandförderer ausgebildete Beutelzuführeinrichtung 11, auf der die Flachbeutel 1 in Reihe angeordnet und beabstandet voneinander der Vorrichtung 10 in Richtung X zugefördert werden. Im Bereich der Vorrichtung 10 weist die Beutelzuführeinrichtung 11 drei aufeinanderfolgende Förderweichen 12, 13, 14 auf. Die Förderweichen 12, 13, 14 und die Beutelzuführeinrichtung 11 bilden eine gemeinsame Förderebene. Jede der Förderweichen 12, 13, 14 ist ebenfalls bevorzugt als Gurt- bzw. Bandförderer ausgebildet. Ferner ist jede der Förderweichen 12, 13, 14 auf der der Beutelzuführeinrichtung 11 abgewandten Seite in jeweils einer horizontal angeordneten Drehachse 16, 17, 18 zwischen zwei Endpositionen schwenkbar. In der ersten, abgesenkten Endposition bilden die Förderweichen 12, 13, 14 eine gemeinsame horizontale Förderebene für einlaufende Flachbeutel 1. In der anderen Endposition ist die der Beutelzuführeinrichtung 11 zugewandte Seite der Förderweichen 12, 13, 14 mindestens um eine Höhe angehoben, die der Höhe eines Flachbeutels 1 entspricht.

In Deckung und unterhalb der Förderweichen 12, 13, 14 ist jeder Förderweiche 12, 13, 14 ein Rutschblech 20 sowie ein Vakuumdrehtisch 21, 22, 23 zugeordnet. Der Einfachheit halber ist in der Figur 1 lediglich unterhalb der Förderweiche 13 das Rutschblech 20 dargestellt, jedoch besitzen auch die beiden anderen Förderweichen 12, 14 identisch ausgebildete Rutschbleche 20. Die Rutschbleche 20 dienen zum Überführen der Flachbeutel 1 von der Ebene der Bandzuführeinrichtung 11 bzw. der Förderweichen 12, 13 auf die Vakuumdrehtische 21, 22, 23. Die Vakuumdrehtische 21, 22, 23 schließen sich möglichst spaltlos an die Rutschbleche 20 an, und erstrecken sich parallel und unterhalb der Bandzuführeinrichtung 11. In den Figuren 1 und 2 ist das Rutschblech 20 S-förmig ausgebildet dargestellt. Es kann jedoch auch beispielsweise als ebene Platte ausgebildet sein. Ebenso sind die Vakuumdrehtische 21, 22, 23 nicht auf eine rechteckige Form beschränkt. Wesentlich ist lediglich, daß ein möglichst absatz- und spaltfreier Übergang von dem jeweiligen Rutschblech 20 auf den jeweiligen Vakuumdrehtisch 21, 22, 23 für einen Flachbeutel 1 erreicht wird. Weiterhin sind die Rutschbleche 20 und der Vakuumdrehtisch 21, 22, 23 so angeordnet bzw. ausgebildet, daß ein Flachbeutel 1 alleine aufgrund seiner kinetischen Energie ohne zusätzlichen Antrieb von der Ebene der Bandzuführeinrichtung 11 bzw. der Förderweichen 12, 13, 14 durch Rutschen auf seinen entsprechenden Vakuumdrehtisch 21, 22, 23 gelangt.

Die Vakuumdrehtische 21, 22, 23 sind in Achsen 27, 28, 29 senkrecht zur Förderebene der Flachbeutel 1 drehbar gelagert, und in horizontaler Richtung quer zur Förderrichtung X der Flachbeutel 1 in Richtung Y zwischen zwei Endpositionen verfahrbar. In der ersten Endposition zum Übernehmen der Flachbeutel 1 befinden sich die Vakuumdrehtische 21, 22, 23 unterhalb der Förderweichen 12, 13, 14. In der zweiten Endposition zum Übergeben der Flachbeutel 1 an die Kartons 2 befinden sich die Vakuumdrehtische 21, 22, 23 seitlich neben den Förderweichen 12, 13, 14 und oberhalb der Kartons 2.

Zum Zuführen der leeren Kartons 2 ist zum Beispiel unterhalb und in Deckung mit der Beutelzuführeinrichtung 11 ein Kartonzuführband 30 angeordnet. An das Kartonzuführband 30 schließen sich unterhalb der Förderweichen 12, 13, 14 zwei parallel zueinander angeordnete, quer zur Förderrichtung X der Flachbeutel 1 bewegliche Kartonpositionierbänder 32, 33 an. Sowohl das Kartonzuführband 30, als auch die Kartonpositionierbänder 32, 33 sind bevorzugt als Gurtförderer mit jeweils separaten Antrieben ausgebildet. Der Abstand des Kartonzuführbandes 30 und der Kartonpositionierbänder 32, 33 zu den Vakuumdrehtischen 21, 22, 23 entspricht mindestens der Höhe der Kartons 2 bei geöffneten Verschlußlappen der Kartons 2. Die Länge der Kartonpositionierbänder 32, 33 ist derart, daß darauf wenigstens einer der Anzahl der Vakuumdrehtische 21, 22, 23 entsprechende Zahl, im Ausführungsbeispiel drei, Kartons 2 Platz finden. Zusätzlich muß, wie später noch erläutert, entsprechend der Größe der Flachbeutel 1 noch ein gewisser Verschiebeweg der Kartons 2 auf den Kartonpositionierbändern 32, 33 gegeben sein.

Zum Abtransport voller Kartons 2 ist in Verlängerung des Kartonzuführbandes 30 ein Kartonabführband 35 angeordnet. Beiderseits der Förderweichen 12, 13, 14 hat die Vorrichtung 10 zwei identisch ausgebildete Beutelübernahme- und Abgabeeinrichtungen 36, 37 mit jeweils drei vertikal bewegbaren Saugern 38, 39. Die einer Abgabeeinrichtung 36, 37 zugeordneten Sauger 38, 39 haben seitlich jeweils den selben Abstand zu den Förderweichen 12, 13, 14. Ferner sind die Sauger 38, 39 bei seitlicher Position der Vakuumdrehtische 21, 22, 23 mit den Flächenschwerpunkten der Vakuumdrehtische 21, 22, 23 ausgerichtet.

Wie in der Figur 2 dargestellt sind oberhalb des Rutschbleches 20 entlang des Rutschwegs des Flachbeutels 1, jedoch unterhalb der Förderweiche 13, drei Sensoren 41, 42, 43 angeordnet, die mit der Steuereinrichtung der Vorrichtung 10 verbunden sind. Die Sensoren 41, 42, 43 sind bevorzugt als Lichtschranken bzw. Fotozellen ausgebildet, so daß beim Passieren des Flachbeutels 1 am Sensor 41, 42, 43 ein entsprechendes Signal erzeugt und der Steuereinrichtung zugeführt wird. Weiterhin ist zwischen der Förderweiche 13 und dem Vakuumdrehtisch 22 ein Blaskopf 45 angeordnet, dessen dem Vakuumdrehtisch 22 zugewandten Blasöffnungen 46 mit einer nicht dargestellten Überdruckquelle verbunden sind. Mit den Blasöffnungen 46 sind Saugöffnungen 47 ausgerichtet, die im Vakuumdrehtisch 22 ausgebildet sind, und die mit einer ebenfalls nicht dargestellten Unterdruckquelle verbunden sind. Die von den Blasöffnungen 46 und Saugöffnungen 47 überdeckte Fläche ist der Größe der Flachbeutel 1 angepasst. Insbesondere weist ein Flachbeutel 1 eine größere projezierte Fläche auf als dies bei den Saugöffnungen 47 der Fall ist, so daß Leckluftverluste an den Saugöffnungen 47 vermieden werden, da ein auf dem Vakuumdrehtisch 22 ruhender Flachbeutel 1 die Saugöffnungen 47 vollständig abdeckt. Es versteht sich, daß auch unterhalb der beiden anderen Förderweichen 12, 14 entsprechende Sensoren 41, 42, 43, Blasköpfe 42 und Vakuumdrehtische 21, 23 angeordnet sind.

Die oben beschriebene Vorrichtung 10 arbeitet wie folgt: Mittels des Kartonzuführbandes 30 werden drei leere Kartons 2 auf eines der beiden dafür in Ausrichtung mit dem Kartonzuführband 30 angeordneten Kartonpositionierbänder 32, 33 gefördert. Anschließend verfährt das mit den leeren Kartons 2 beschickte Kartonpositionierband 32, 33 seitlich in die Position unterhalb der Sauger 38, 39, die für das Ablegen der ersten Flachbeutel 1 entsprechend eines vorgesehenen Ablegemusters für die Flachbeutel 1 im Karton 2 erforderlich ist. Bereits während das Kartonpositionierband 32, 33 in diese erste Position verfährt, werden von der Beutelzuführeinrichtung 11 einlaufende Flachbeutel 1 auf die Vakuumdrehtische 21, 22, 23 verteilt. Um eine möglichst hohe Leistung der Vorrichtung 10 zu erzielen, wird der erste einlaufende Flachbeutel 1 dem Vakuumdrehtisch 23, der zweite Flachbeutel 1 dem Vakuumdrehtisch 22 und der dritte einlaufende Flachbeutel 1 dem Vakuumdrehtisch 21 zugeordnet. Das Überführen der einlaufenden Flachbeutel 1 auf die entsprechenden Vakuumdrehtische 21, 22, 23 von der Beutelzuführeinrichtung 11 erfolgt durch entsprechendes Anheben der dem Vakuumdrehtisch 21, 22, 23 zugeordneten Förderweiche 12, 13, 14, während die anderen Förderweichen 12, 13, 14 in ihrer abgesenkten Endposition verbleiben.

Um zu gewährleisten, daß die Flachbeutel 1 stets auf den entsprechenden Vakuumdrehtisch 21, 22, 23 gelangen, und nicht bereits im Bereich der Rutschbleche 20 zu Stillstand kommen, ist die Fördergeschwindigkeit der Flachbeutel 1 auf der Beutelzuführeinrichtung 11 bzw. den Förderweichen 12, 13, 14 derart hoch, daß die Flachbeutel 1 nach dem Gleiten auf den Rutschblechen 20 stets mit einem gewissen Geschwindigkeitsüberschuß auf den Vakuumdrehtisch 21, 22, 23 gelangen. Um diesen Geschwindigkeitsüberschuß abzubauen, und den Flachbeutel 1 an definierter Stelle auf dem Vakuumdrehtisch 21, 22, 23 zum Stillstand zu bringen, wird aus den von den Sensoren 41, 42, 43 an die Steuereinrichtung zugeführten Signalen von der Steuereinrichtung die jeweilige Geschwindigkeit des Flachbeutels 1 berechnet. Entsprechend dieses Ergebnisses werden die Blasöffnungen 46 bzw. Saugöffnungen 47 mit Druck- bzw. Saugluft beaufschlagt, so daß der Flachbeutel 1 an gewünschter Stelle auf dem Vakuumdrehtisch 21, 22, 23 zum Stillstand kommt. Durch die Verwendung des Blaskopfes 45 und dessen Blasöffnungen 46 wird dabei bewirkt, daß der Flachbeutel 1 auf die Saugöffnungen 47 niedergedrückt wird, so daß unebene Begrenzungswände der Flachbeutel 1 nicht so leicht zu Leckluftverlusten an den Saugöffnungen 47 führen.

Sobald jeweils ein Flachbeutel 1 auf dem Vakuumdrehtisch 21, 22, 23 mittels Unterdruck positioniert ist, werden die Vakuumdrehtische 21, 22, 23 in eine Lage unmittelbar unter den entsprechenden Saugern 38, 39 verfahren. Während des Verfahrens können je nach Ablegemuster der Flachbeutel 1 im Karton 2 die Vakuumdrehtische 21, 22, 23 in ihren vertikal angeordneten Achsen 26, 27, 28 gedreht werden. Nachdem die Flachbeutel 1 unterhalb der Sauger 38, 39 positioniert sind, werden die Sauger 38, 39 in Kontakt mit den Oberseiten der Flachbeutel 1 gebracht, ein entsprechender Unterdruck zum Halten der Flachbeutel 1 geschaltet, und anschließend, falls nötig, wieder ein Stück nach oben verfahren, damit die Vakuumdrehtische 21, 22, 23 zum Aufnehmen der nächsten Flachbeutel 1 wieder in ihre Position unterhalb der Förderweichen 12, 13, 14 verfahren werden können. Wenn die Vakuumdrehtische 21, 22, 23 wieder unter ihre Förderweichen 12, 13, 14 zurückverfahren werden, werden die Sauger 38, 39 zum Ablegen der Flachbeutel 1 im Karton 2 nach unten verfahren und der Unterdruck der Sauger 38, 39 wieder abgeschaltet.

Zum Aufnehmen der nächsten Flachbeutel 1 werden die Sauger 38, 39 wieder in ihre ursprüngliche, angehobene Position verfahren. Um zu ermöglichen, daß die nachfolgenden Flachbeutel 1 entsprechend des vorgesehenen Ablegemusters in den Kartons 2 abgelegt werden, wird das jeweilige Kartonpositionierband 32, 33 in die entsprechende Position unterhalb der Sauger 38, 39 verfahren. Dies wird einerseits durch eine entsprechende Bewegung in Richtung Y, und andererseits durch den separaten Antriebs des Kartonpositionierbandes 32, 33 in Richtung X erzielt. Zum Erzielen exakter Positionen sind sowohl der Antrieb für die Drehbewegung der Kartonpositionierbänder 32, 33, als auch der separate Antrieb der Kartonpositionierbänder 32, 33 bevorzugt mit Servomotorensystemen ausgebildet. Auf die oben beschriebene Art und Weise werden jeweils drei Flachbeutel 1 zeitgleich in jeweils einen Karton 2 eingebracht. Entsprechend der Größe der Flachbeutel 1 und der Kartons 2 ist es dabei möglich, daß jede Lage mehrere Flachbeutel 1 umfaßt.

Während drei auf dem einen Kartonpositionierband 32, 33 befindliche Kartons 2 mit Flachbeutel 1 befüllt werden, wird gleichzeitig das andere Kartonpositionierband 32, 33 mit leeren Kartons 2 bestückt, und anschließend in seine zugeordnete Lage unterhalb der Sauger 38, 39 verfahren. Sobald die Kartons 2 auf dem einen Kartonpositionierband 32, 33 vollständig mit Flachbeuteln 1 befüllt sind, werden die Vakuumdrehtische 21, 22, 23 mit den nächsten Flachbeuteln 1 zu den zwischenzeitlich bereitgestellten Kartons 2 auf dem anderen der beiden Kartonpositionierbänder 32, 33 verfahren. Auf diese Weise können von der Beutelzuführeinrichtung 11 kontinuierlich volle Flachbeutel 1 der Vorrichtung 10 zugeführt werden.

Nachdem die Kartons 2 auf dem einen Kartonpositionierband 32, 33 vollständig mit Flachbeuteln 1 befüllt sind, wird das Kartonpositionierband 32, 33 wieder unterhalb der Förderweichen 12, 13, 14 und fluchtend mit der Beutelzuführeinrichtung 11 bzw. dem Kartonabführband 35 positioniert. Anschließend werden die vollen Kartons 2 von dem Kartonpositionierband 32, 33 auf das Kartonabführband 35 gefördert, das die Kartons 2 einer nachfolgend angeordneten, nicht dargestellten Kartonverschließvorrichtung zuführen kann.

Ergänzend wird erwähnt, daß zum Erkennen fehlerhafter Flachbeutel 1 im Bereich der Beutelzuführeinrichtung eine Überprüfeinrichtung angeordnet sein kann, die beispielsweise die Position und Höhe der ankommenden Flachbeutel 1 überprüft. Als schlecht erkannte Flachbeutel 1 können anschließend entweder ausgeschieden, oder deren Position korrigiert werden. Das Ausscheiden fehlerhafter Flachbeutel 1 kann beispielsweise dadurch erfolgen, daß in Verlängerung der Förderweiche 14 eine Beutelabführeinrichtung angeordnet ist, und die fehlerhaften Flachbeutel 1 über alle Förderweichen 12, 13, 14 auf dieses Beutelabführband gefördert werden.

Um die Leistung der Vorrichtung 10 zu erhöhen ist es denkbar, die Anzahl der Förderweichen, Vakuumdrehtische, Kartonpositionierbänder und Sauger zu erhöhen. Somit können pro Arbeitstakt der Vorrichtung 10 mehr Flachbeutel in die Kartons eingebracht werden. Dies ist auch möglich, wenn in Abwandlung des oben beschriebenen Ausführungsbeispiels nicht nur jeweils ein Flachbeutel 1, sondern mehrere unmittelbar nacheinander geförderte Flachbeutel 1, auf einem der Vakuumdrehtische 21, 22, 23 positioniert werden. In diesem Fall müssen selbstverständlich die Vakuumdrehtische 21, 22, 23 und die Abgabeeinrichtungen 36, 37 (durch eine entsprechende Anzahl von Saugern 38, 39) angepasst werden.

Die Vorrichtung kann auf verschiedene Art und Weise modifiziert werden. So ist es beispielsweise denkbar, das Kartonzuführband 30 und/oder das Kartonabführband 35 nicht in Deckung bzw. fluchtend mit der Beutelzuführeinrichtung 11 und den Förderweichen 12, 13, 14, sondern seitlich versetzt dazu anzuordnen. Je nach Anwendungsfall kann damit die Kartonwechselzeit verkürzt, und somit die Leistung der Vorrichtung erhöht werden. Auch kann anstatt der als Bandförderer ausgebildeten Beutelzuführeinrichtung und der Förderweichen ein Riemenband zu verwenden, das mit mehreren schwenkbaren Gabeln zusammenwirkt. Die Gabeln tauchen zum Aufnehmen eines Flachbeutels zwischen den einzelnen Riemen des Riemenbandes ein. Sobald ein Flachbeutel in den Bereich oberhalb der Gabel gelangt, schwingt die Gabel nach oben. In dieser Position können die Gabeln analog der Vakuumdrehtische seitlich bis unterhalb der Sauger verfahren werden. Es ist jedoch auch denkbar, die Gabeln ortsfest zu belassen, und horizontal verschiebbare Sauger zu verwenden, die die Flachbeuteln von den Gabeln übernehmen. In die Sauger kann beispielsweise auch eine Rotationseinrichtung integriert sein, um die von den Gabeln übernommenen Flachbeutel lagegerecht in die Kartons einbringen zu können.

Bei einer weiteren Modifikation der Vorrichtung werden anstelle der Förderweichen oder der Gabeln sogenannten, an sich bekannte Linienverteiler verwendet. Wesentlich für die Erfindung ist lediglich, daß jeder ankommende Flachbeutel auf eine separate Station bzw. Vakuumdrehtisch verteilt wird. Sobald alle Stationen mit jeweils einem Flachbeutel aufgefüllt sind, werden diese gleichzeitig von mehreren Saugern übernommen, und jeder Flachbeutel in jeweils einen getrennten Karton gleichzeitig eingebracht.

Selbstverständlich ist es auch möglich, die beschriebene Vorrichtung 10 nicht nur zum Einbringen von gefüllten Flachbeuteln 1 in Kartons 2 zu verwenden. Vielmehr können mittels der Vorrichtung 10 verschiedenste Gegenstände, wie beispielsweise Schachteln, Blisterverpackungen oder andere formbeständige Produkte in Kartons 2 eingebracht werden.

## Patentansprüche

1. Vorrichtung (10) zum Einbringen von Gegenständen, insbesondere von gefüllten Flachbeuteln (1) in Kartons (2), mit einer die Flachbeutel (1) in Reihe fördernden ersten Fördereinrichtung (11) und wenigstens einem Zwischenspeicherelement (21, 22, 23) für jeweils wenigstens einen Flachbeutel (1), das bis unterhalb eines vertikal beweglichen Saugers (38, 39) bewegbar ist, wobei der Sauger (38, 39) in Deckung mit einem zu befüllenden Karton (2) angeordnet ist, dadurch gekennzeichnet, daß mit der ersten Fördereinrichtung (11) wenigstens ein zwischen zwei Positionen bewegliches Weichenelement (12, 13, 14) zusammenwirkt, daß in der ersten Position des Weichenelements (12, 13, 14) jeweils wenigstens ein Flachbeutel (1) von der ersten Fördereinrichtung (11) einem ersten Zwischenspeicherelement (21, 22, 23) zuführt wird und daß in der zweiten Position des Weichenelements (12, 13, 14) dieses jeweils wenigstens einen Flachbeutel (1) zu einem anderen Zwischenspeicherelement (21, 22, 23) weiterleitet, das bis unterhalb eines vertikal beweglichen weiteren Saugers (38, 39) bewegbar ist, wobei der weitere Sauger (38, 39) in Deckung mit einem weiteren zu befüllenden Karton (2) angeordnet ist.

2. Vorrichtung nach Anspruch 1, dadurch gekennzeichnet, daß das Weichenelement (12, 13, 14) um eine horizontale Achse (16, 17, 18) schwenkbar gelagert ist und oberhalb des ersten Zwischenspeicherelements (21, 22, 23) in Verlängerung der ersten Fördereinrichtung (11) angeordnet ist.

3. Vorrichtung nach Anspruch 2, dadurch gekennzeichnet, daß zwischen der ersten Fördereinrichtung (11) und dem ersten Zwischenspeicherelement (21) oder dem Weichenelement (12, 13, 14) und dem Folgenden Zwischenspeicherelement (22, 23) ein Überführelement (20) angeordnet ist, das bei in die erste Position geschwenktem Weichenelement (12, 13, 14) jeweils wenigstens einen Flachbeutel (1) von der ersten Fördereinrichtung (11) oder einem Weichenelement (12, 13, 14) auf das entsprechende Zwischenspeicherelement (21, 22, 23) überführt.

4. Vorrichtung nach einem der Ansprüche 1 bis 3, dadurch gekennzeichnet, daß jedes Zwischenspeicherelement (21, 22, 23) um eine vertikal zur Förderrichtung (X) der Flachbeutel (1) angeordneten Achse (27, 28, 29) drehbar ist.

5. Vorrichtung nach einem der Ansprüche 1 bis 4, dadurch gekennzeichnet, daß die Kartons (2) auf wenigstens einer zweiten Fördereinrichtung (32, 33) angeordnet sind, die quer zur Förderrichtung (X) der Flachbeutel (1) beweglich angeordnet ist.

6. Vorrichtung nach Anspruch 5, dadurch gekennzeichnet, daß die zweite Fördereinrichtung (32, 33) zum Verändern der Ablegeposition von Flachbeuteln (1) im Karton (2) und zum Zu- und Abführen von Kartons (2) auf die zweite Fördereinrichtung (32, 33) einen separaten Antrieb aufweist.

7. Vorrichtung nach einem der Ansprüche 1 bis 6, dadurch gekennzeichnet, daß unterhalb der ersten Fördereinrichtung (11) für die Flachbeutel (1) ein Zuförderband (30) für leere Kartons (2) angeordnet ist.

8. Vorrichtung nach einem der Ansprüche 5 und 7, dadurch gekennzeichnet, daß jede der zweiten Fördereinrichtungen (32, 33) für die leeren Kartons (2) mit jeweils einer separaten Übergabeeinrichtung (36, 37) für die Flachbeutel (1) zusammenwirkt.

9. Vorrichtung nach einem der Ansprüche 1 bis 8, dadurch gekennzeichnet, daß in jedem Zwischenspeicherelement (21, 22, 23) mit einer Unterdruckquelle verbundene Saugöffnungen (47) und/oder oberhalb jedes Zwischenspeicherelements (21, 22, 23) mit einer Überdruckquelle verbundene Blasöffnungen (46) zum Abstoppen und Halten von Flachbeuteln (1) ausgebildet sind.

10. Vorrichtung nach Anspruch 3 und 9, dadurch gekennzeichnet, daß die Saugöffnungen (47) und/oder die Blasöffnungen (46) mit im Bereich des zugeordneten Überführelements (20) angeordneten wenigstens einem Sensor (41, 42, 43) zusammenwirken, und daß die Saugöffnungen (47) und/oder die Blasöffnungen (46) entsprechend des Signals des wenigstens einen Sensors (41) von einer Steuereinrichtung ansteuerbar sind.

## Claims

1. Apparatus (10) for introducing items, in particular filled flat bags (1), into cartons (2), having a first conveying arrangement (11), which conveys the flat bags (1) in rows, and having at least one intermediate storage element (21,22,23) which is intended for in each case at least one flat bag (1) and can be moved to beneath a vertically movable sucker (38,39), the sucker (38,39) being arranged congruently with a carton (2) which is to be filled, characterized in that at least one diverter element (12,13,14), which can be moved between two positions, interacts with the first conveying arrangement (11), in that in the first position of the diverter element (12,13,14), in each case at least one flat bag (1) is fed from the first conveying arrangement (11) to a first intermediate storage element (21,22,23), and in that, in the second position of the diverter element (12,13,14), the latter passes on in each case at least one flat bag (1) to another intermediate storage element (21,22,23), which can be moved to beneath a further vertically movable sucker (38,39), the further sucker (38,39) being arranged congruently with a further carton (2) which is to be filled.

2. Apparatus according to Claim 1, characterized in that the diverter element (12,13,14) is mounted such that it can be pivoted about a horizontal spindle (16,17,18) and is arranged above the first intermediate storage element (21,22,23), in extension of the first conveying arrangement (11).

3. Apparatus according to Claim 2, characterized in that arranged between the first conveying arrangement (11) and the first intermediate storage element (21) or the diverter element (12,13,14) and the following intermediate storage element (22,23) is a transfer element (20) which, with the diverter element (12,13,14) pivoted into the first position, transfers in each case at least one flat bag (1) from the first conveying arrangement (11), or from a diverter element (12,13,14), to the appropriate intermediate storage element (21,22,23).

4. Apparatus according to one of Claims 1 to 3, characterized in that each intermediate storage element (21,22,23) can be rotated about an axis (27,28,29) which is arranged perpendicularly to the conveying direction (X) of the flat bags (1).

5. Apparatus according to one of Claims 1 to 4, characterized in that the cartons (2) are arranged on at least one second conveying arrangement (32,33), which is arranged such that it can be moved transversely to the conveying direction (X) of the flat bags (1).

6. Apparatus according to Claim 5, characterized in that the second conveying arrangement (32,33) has a separate drive for changing the depositing position of flat bags (1) into the carton (2) and for feeding cartons (2) to the second conveying arrangement (32,33) and removing them therefrom.

7. Apparatus according to one of Claims 1 to 6, characterized in that a feed belt (30) for empty cartons (2) is arranged beneath the first conveying arrangement (11) for the flat bags (1).

8. Apparatus according to either of Claims 5 and 7, characterized in that each of the second conveying arrangements (32,33) for the empty cartons (2) interacts with a separate delivery arrangement (36,37) for the flat bags (1) in each case.

9. Apparatus according to one of Claims 1 to 8, characterized in that, for the purpose of stopping and retaining flat bags (1), suction openings (47) connected to a negative-pressure source are formed in each intermediate storage element (21,22,23) and/or blowing openings (46) connected to a positive-pressure source are formed above each intermediate storage element (21,22,23).

10. Apparatus according to Claims 3 and 9, characterized in that the suction openings (47) and/or the blowing openings (46) interact with at least one sensor (41,42,43) arranged in the region of the associated transfer element (20), and in that the suction openings (47) and/or the blowing openings (46) can be activated by a control arrangement in accordance with the signal of the at least one sensor (41).

## Revendications

1. Dispositif (10) servant à mettre des objets, en particulier des sachets plats (1) remplis, dans des cartons (2), comprenant un premier système de transport (11)qui transporte en rangs les sachets plats (1), et au moins un élément de stockage intermédiaire (21, 22, 23) destiné respectivement à au moins un sachet plat (1) mobile verticalement en dessous d'un aspirateur (38, 39), l'aspirateur (38, 39) étant mis en recouvrement avec un carton (2) à remplir,
caractérisé en ce que
· au moins un élément d'aiguillage (12, 13, 14), mobile entre deux positions, coopère avec le premier système de transport (11),
· dans la première position de l'élément d'aiguillage (12, 13, 14), respectivement au moins un sachet plat (1) est amené par le premier système de transport (11) à un premier élément de stockage intermédiaire (21, 22, 23), et
· quand l'élément d'aiguillage (12, 13, 14) est dans sa seconde position, celui-ci transfère respectivement au moins un sachet plat (1) à un autre élément de stockage intermédiaire (21, 22, 23) qui peut se déplacer jusqu'en dessous d'un autre aspirateur (38, 39), mobile verticalement, l'autre aspirateur (38, 39) étant disposé en recouvrement avec un autre carton (2) à remplir.

2. Dispositif selon la revendication 1,
caractérisé en ce que
l'élément d'aiguillage (12, 13, 14) est monté de façon à pouvoir pivoter autour d'un axe horizontal (16, 17, 18) et est disposé au dessus du premier élément de stockage intermédiaire (21, 22, 23) dans le prolongement du premier système de transport (11).

3. Dispositif selon la revendication 2,
caractérisé en ce que
entre le premier système de transport (11) et le premier élément de stockage intermédiaire (21) ou entre l'élément d'aiguillage (12, 13, 14) et l'élément de stockage intermédiaire suivant (22, 23), on dispose un élément de passage (20) qui, quand l'élément d'aiguillage (12, 13, 14) a pivoté dans la première position, fait passer respectivement un sachet plat (1) du premier système de transport (11) ou d'un élément d'aiguillage (12, 3, 14), à l'élément de stockage intermédiaire correspondant (21, 22, 23).

4. Dispositif selon l'une des revendication 1 à 3,
caractérisé en ce que
chaque élément de stockage intermédiaire (21, 22, 23) est monté de façon à pouvoir tourner autour d'un axe (27, 28, 29) disposé verticalement par rapport au sens (X) de transport des sachets plats (1)

5. Dispositif selon l'une des revendication 1 à 4,
caractérisé en ce que
les cartons (2) sont disposés sur au moins un deuxième système de transport (32, 33) qui est disposé de façon mobile perpendiculairement au sens (X) de transport des sachets plats (1).

6. Dispositif selon la revendication 5,
caractérisé en ce que
le deuxième système de transport (32, 33) présente un mécanisme d'entraînement séparé pour faire varier la position de dépôt des sachets plats (1) dans le carton (2) et pour amener et évacuer des cartons (2) sur le deuxième système de transport (32, 33).

7. Dispositif selon l'une des revendications 1 à 6, caractérisé en ce qu'
en dessous du premier système de transport, on dispose, pour les sachets plats (1), une bande d'amenée (30) de cartons vides (2).

8. Dispositif selon l'une des revendications 5 et 7,
caractérisé en ce que
chacun des deux systèmes de transport (32, 33) pour les cartons vides (2) coopère avec respectivement un système séparé (36, 37) de délivrance des sachets plats (1).

9. Dispositif selon l'une des revendications 1 à 8,
caractérisé en ce que
dans chaque élément de stockage intermédiaire (21, 22, 23), on a constitué des orifices d'aspiration (47) reliés à une source de dépression, et/ou en dessus de chaque élément de stockage intermédiaire (21, 22, 23) on a constitué des orifices de soufflage (46) reliés à une source de surpression, pour stopper et maintenir les sachets plats (11).

10. Dispositif selon la revendication 3 et la revendication 9,
caractérisé en ce que
les orifices d'aspiration (47) et/ou les orifices de soufflage (46) coopèrent avec au moins un détecteur (41, 42, 43) disposé dans la zone de l'élément de passage (20) correspondant, et
les orifices d'aspiration (47) et/ou les orifices de soufflage (46) peuvent être commandés par un dispositif de commande en fonction du signal d'au moins l'un des détecteurs (41).
